# EUROPÄISCHE PATENTSCHRIFT

(11) **EP 2 188 552 B1**
(45) Veröffentlichungstag und Bekanntmachung des Hinweises auf die Patenterteilung: **16.11.2011**
(21) Anmeldenummer: 08803993.8
(22) Anmeldetag: 11.09.2008
(51) Int. Cl.: F16H 63/36, F16H 63/38, F16H 61/688

(54) **EINRICHTUNG ZUR RASTIERUNG UND VERRIEGELUNG VON SCHALTSCHWINGEN EINER SCHALTEINRICHTUNG EINES GETRIEBES UND VERWENDUNG EINER SOLCHEN EINRICHTUNG**
DEVICE FOR LATCHING AND LOCKING SHIFT ROCKERS OF A SHIFT DEVICE OF A TRANSMISSION, AND USE OF A DEVICE OF SAID TYPE
DISPOSITIF POUR L'ENCLIQUETAGE ET LE VERROUILLAGE DE BALANCIERS DE COMMANDE D'UN DISPOSITIF DE COMMANDE D'UN ENGRENAGE ET SON UTILISATION

(30) Priorität: 18.09.2007 DE 102007044519
(43) Veröffentlichungstag der Anmeldung: 26.05.2010
(73) Patentinhaber: ZF Friedrichshafen AG, 88038 Friedrichshafen (DE)
(72) Erfinder: RETSCH, Matthias, 14776 Brandenburg a.d. Havel (DE); DRABEK, Michael, 14776 Brandenburg (DE)
(74) Vertreter: Paul, Andreas
(86) Internationale Anmeldenummer: PCT/EP2008/062026
(87) Internationale Veröffentlichungsnummer: WO 2009/037175

(56) Entgegenhaltungen:
- WO-A-2006/004422
- DE-A1- 1 780 027
- DE-A1- 10 153 634
- DE-A1- 10 351 131
- DE-A1- 19 901 056
- DE-B1- 1 750 032
- US-A- 3 264 894

## Beschreibung

Die vorliegende Erfindung bezieht sich auf eine Einrichtung zur Rastierung und Verriegelung von Schaltschwingen einer Schalteinrichtung eines Getriebes, gemäß dem Oberbegriff des Patentanspruchs 1.

Aus der Fahrzeugtechnik sind Schalteinrichtungen für Getriebe von Kraftfahrzeugen bekannt. Sie umfassen in der Regel eine zentrale Schaltwelle, an der mehrere Schaltschwingen angeordnet sind, welche zum Schalten eines Gangs in entsprechende Schiebemuffen eingreifen.

In Getrieben, bei denen die Gänge durch Schaltelemente eingelegt werden, muss eine Verriegelung der nicht am Schaltvorgang beteiligten Schaltelemente sichergestellt sein, wobei die Verriegelung in der Regel über separate Bauelemente, wie z. B. Stifte erfolgt. Beispielsweise müssen bei einem herkömmlichen Handschaltgetriebe mehr als zwei Schaltelemente verriegelt werden; bei einem Doppelkupplungsgetriebe muss hingegen pro Teilgetriebe ein Schaltelement verriegelt werden. Die Rastierung erfolgt im Normalfall über einen Rastenbolzen, der im Gehäuse oder anderweitig abgestützt wird, wobei die Rastenkontur am Schaltelement angeordnet ist.

Des weiteren sind aus dem Stand der Technik Rastierungen bekannt, die direkt auf dem Synchronkörper angeordnet sind. Hierbei werden in mindestens zwei auf dem Umfang des Synchronkörpers angeordnete Bohrungen Federn eingesetzt, welche in Wirkverbindung mit Kugeln und einer entsprechenden Kontur in der Schaltmuffe stehen.

Üblich sind passive Verriegelungsvorrichtungen, deren Schaltelemente sich gegenseitig verriegeln und aktive Verriegelungsvorrichtungen, bei denen über Schaltelemente das für den Schaltvorgang benötigte Schaltelement freigegeben wird. Aus dem Stand der Technik sind Vorrichtungen bekannt, die sich im wesentlichen auf ein zu verschiebendes Bauteil beziehen, welches über spezielle Konturen die entsprechenden Schaltelemente freigibt.

Eine Verriegelungsvorrichtung für ein Kraftfahrzeug-Handschaltgetriebe, die derart ausgestaltet ist, dass sie bereits beim Wählen der Schaltgasse, d.h. bevor in der gewählten Schaltgasse der zu schaltende Gang eingelegt ist, die nicht zu schaltenden Schaltelemente verriegelt, ist aus der DE-A-199 51 683 der Anmelderin bekannt. Dieses Handschaltgetriebe weist eine zentrale Schaltwelle auf mit gabelförmigen Schaltelementen in Form von Schaltschwingen oder Schaltgabeln, die in Schiebemuffen eingreifen, sowie eine Verriegelungsvorrichtung, die einen Hebel aufweist, dessen Drehpunkt auf der Drehachse der axial verschiebbar gelagerten zentralen Schaltwelle liegt und der über eine radiale Mitnahmeanordnung mit ihr verbunden ist. Ferner ist ein Sperrteil vorgesehen, das in Schaltrichtung gehäusefest angeordnet ist und das einen Koppeltrieb aufweist, der die Drehung des Hebels in eine lineare Bewegung des Sperrteils quer zur Schaltrichtung der zentralen Schaltwelle umsetzt. Es sind ferner Sperrelemente an den Schaltelementen und am Sperrteil vorgesehen, die derart ausgestaltet sind, dass bei Überdeckung dieser Sperrelemente in Schaltrichtung eine Schaltbewegung der Schaltelemente verhindert wird. Das Sperrteil ist insbesondere ein Sperrblech, welches auf mehreren Führungsbolzen quer zur zentralen Schaltwelle verschiebbar gelagert ist und das mit einer Vielzahl von Ausnehmungen versehen ist, die mit auf den Schaltelementen angeordneten Sperrelementen zusammenwirken.

Aus der DE 41 18 931 A1 der Anmelderin ist ein Handschaltgetriebe bekannt, umfassend mehrere Synchroneinheiten, die durch Schaltschwingen oder durch auf Schaltstangen angeordnete Schaltgabeln betätigt werden. Hierbei sind Verriegelungselemente vorgesehen, umfassend Verriegelungsschwingen zum Verriegeln von mehreren Schaltschwingen untereinander, sowie Sperrkugeln oder eine Sperrplatte zum Verriegeln mehrerer Schaltstangen un-tereinander.

Schließlich zeigt das gattungsgemäße Dokument DE 103 51 131 A1 eine Einrichtung zur Rastierung und Verriegelung von Schaltschwingen eines Getriebes mit Rastierteilen, die sowohl zur Rastierung als auch zur Verriegelung der Schaltschwingen dienen.

Der vorliegenden Erfindung liegt die Aufgabe zugrunde, eine alternative Einrichtung zur Rastierung und Verriegelung von Schaltschwingen einer Schalteinrichtung eines Getriebes anzugeben, durch deren Verwendung kein separates Bauteil zur Verriegelung erforderlich ist.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Einrichtung zur Rastierung und Verriegelung von Schaltschwingen einer Schalteinrichtung eines Getriebes vorgeschlagen, welche für jede Schaltschwinge ein in einer Aufnahme der Schaltschwinge angeordnetes Rastierteil aufweist, welches zur Rastierung mit einer in einem nicht beweglichen Getriebebereich angebrachten Rastenkontur zusammenwirkt, wobei das Rastierteil zusätzlich zur Rastierung auch zur Verriegelung der Schaltschwinge dient.

Gemäß der Erfindung kann das Rastierteil ein kombiniertes Teil mit einem geschlossenen Gehäuse (Kombi-Bolzen) sein oder aus einer Buchse, einer Feder und einem Bolzen oder einer Kugel bestehen.

In vorteilhafter Weise dient das Rastierteil auch der Verriegelung der für die Schaltung nicht benötigten Schaltschwingen, wobei zu diesem Zweck ein in einem nicht beweglichen Getriebebereich angeordnetes und drehbar gelagertes Verriegelungsblech vorgesehen ist, welches Nuten zur Aufnahme der des Gehäuses bzw. der Buchse der Rastierteile zwei benachbarter Schaltschwingen aufweist.

Hierbei wird durch die Bewegung der Schaltschwinge zum Einlegen eines Ganges und somit durch die Bewegung des Rastierteils das Verriegelungsblech durch das Gehäuse bzw. die Buchse des Rastierbolzens derart gedreht, dass das Gehäuse bzw. die Buchse des Rastierteils der benachbarten Schaltschwinge spielfrei in der entsprechenden Nut hineingedrückt bleibt, solange das Rastierteil der betätigten Schaltschwinge nicht in die Neutralstellung zurückbewegt wird.

Durch die erfindungsgemäße Konzeption der Integration des Rastierteils in eine Schaltschwinge und die zusätzliche Verwendung desselben zur Verriegelung der Schaltschwinge, wenn diese nicht benötigt wird, entfällt die Notwendigkeit eines separaten Teiles für die gegenseitige Verriegelung jeweils zwei Schaltschwingen der Schalteinrichtung.

Die erfindungsgemäße Einrichtung zur Rastierung und Verriegelung von Schaltschwingen ist insbesondere für Doppelkupplungsgetriebe geeignet, bei denen in jedem Teilgetriebe zwei Schaltschwingen vorgesehen sind. Es ist auch möglich die erfindungsgemäße Einrichtung bei einem herkömmlichen Handschaltgetriebe zu verwenden.

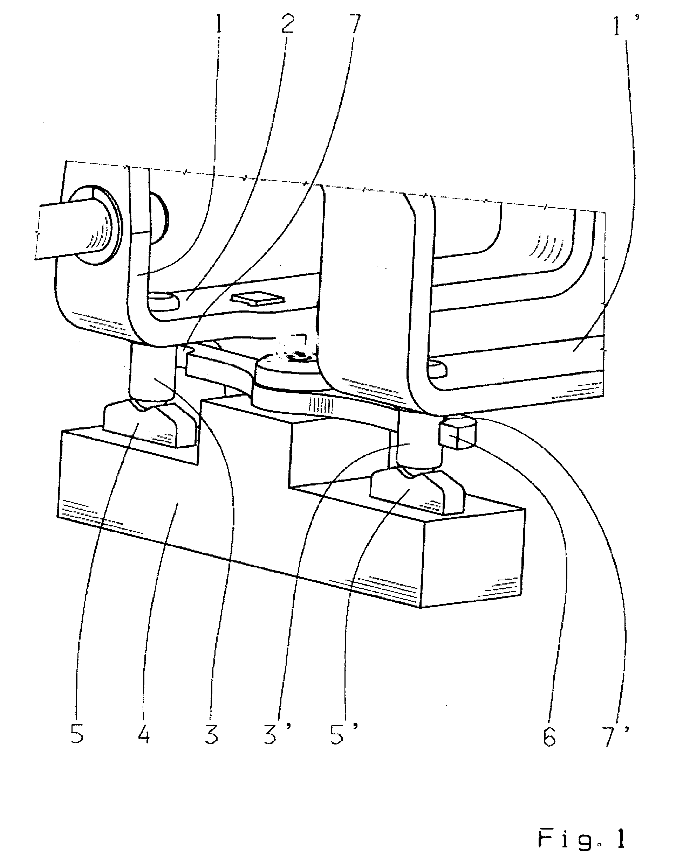

Die Erfindung wird im folgenden anhand der beigefügten Figur, welche eine schematische perspektivische Darstellung einer erfindungsgemäß ausgebildeten Schaltschwinge, der Rastenkontur und des Verriegelungsblechs zeigt, beispielhaft näher erläutert.

In der Figur sind zwei Schaltschwingen 1, 1' gezeigt, welche jeweils in einer geeigneten Aufnahme 2 angeordnetes Rastierteil 3, 3' aufweisen. Die dem jeweiligen Rastierteil 3, 3' entsprechende Rastenkontur 5, 5' ist in einem nicht beweglichen Getriebebereich, z.B. in einem Gehäuse 4 angebracht. Die Rastierteile 3, 3' können als kombinierte Teile ausgeführt sein oder aus einer Buchse, einer Rastierfeder und einem Bolzen oder einer Kugel bestehen.

Wie aus der Figur ersichtlich, ist ein den Schaltschwingen 1,1' zugeordnetes drehbar gelagertes Verriegelungsblech 6 vorgesehen, dessen Drehpunkt zwischen den beiden Rastenkonturen 5, 5' der benachbarten Schaltschwingen 1, 1' angeordnet ist, wobei das Verriegelungsblech 6 an jedem Ende eine Nut 7, 7' zur Aufnahme des Gehäuses bzw. der Buchse der Rastierteile 3, 3' aufweist.

Wenn sich die Schaltschwingen 1, 1' in der Neutralstellung befinden, erfolgt die Neutralrastierung durch die Wirkverbindung zwischen den Rastierteilen 3, 3' und den entsprechenden Rastenkonturen 5, 5'. Hierbei werden durch die Kraft der Rastierfeder die Rastierteile 3, 3' in die entsprechende Rastenkontur 5, 5' hineingedrückt, so dass ohne Krafteinwirkung kein Gang eingelegt werden kann. Das Verriegelungsblech 6 ist hierbei derart angeordnet und dimensioniert, dass sich die Gehäuse bzw. die Buchsen der Rastierteile 3, 3' teilweise in der jeweiligen Nut 7, 7' des Verriegelungsblechs 6 befinden; ferner wird das Verriegelungsblech 6 durch ein nicht dargestelltes Federelement in dieser Position gehalten.

Wenn nun eine Schaltschwinge 1 betätigt wird, wird das mit der Schaltschwinge verbundene Rastierteil 3 aufgrund der Bewegung der Schaltschwinge und bedingt durch die Geometrie der Rastenkontur 5 gegen die Kraft der Rastierfeder aus der Rastenkontur 5 herausgedrückt und führt eine axiale Bewegung aus.

Das Verriegelungsblech 6 ist erfindungsgemäß derart geformt, dass die axiale Bewegung des Rastierteils 3 in einer Drehbewegung des Verriegelungsblechs 6 gegen die Kraft des Federelementes des Verriegelungsblechs 6 resultiert, derart, dass sich die Nut 7' des Verriegelungsblechs 6 in Richtung auf das Rastierteil 3' der nicht betätigten Schaltschwinge 1' bewegt und dieses vollständig aufnimmt, wobei das Gehäuse bzw. die Buchse des Rastierteils 3' der benachbarten Schaltschwinge 1' spielfrei in der entsprechenden Nut 7' hineingedrückt bleibt, solange das Rastierteil 3 nicht in die Neutralstellung zurückbewegt wird, wodurch die Schaltschwinge 1' verriegelt wird.

Selbstverständlich fällt auch jede konstruktive Ausbildung, insbesondere jede räumliche Anordnung der Bauteile der erfindungsgemäßen Einrichtung zur Rastierung und Verriegelung von Schaltschwingen einer Schalteinrichtung eines Getriebes an sich sowie zueinander und soweit technisch sinnvoll, unter den Schutzumfang der vorliegenden Ansprüche, ohne die Funktion der Einrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Schaltschwinge
- 1': Schaltschwinge
- 2: Aufnahme
- 3: Rastierteil
- 3': Rastierteil
- 4: Gehäuse
- 5: Rastenkontur
- 5': Rastenkontur
- 6: Verriegelungsteil
- 7: Nut
- 7': Nut

## Patentansprüche

1. Einrichtung zur Rastierung und Verriegelung von Schaltschwingen (1,1') einer Schalteinrichtung eines Getriebes, welche für jede Schaltschwinge (1,1') ein Rastierteil (3, 3') aufweist, welches zusätzlich zur Rastierung auch zur Verriegelung der Schaltschwinge (1, 1') dient, **dadurch gekennzeichnet, dass** das Rastierteil (3, 3') in einer Aufnahme (2) der Schaltschwinge (1, 1') angeordnet ist, dass das Rastierteil (3, 3') zur Rastierung mit einer in einem nicht beweglichen Getriebebereich angebrachten Rastenkontur (5, 5') zusammenwirkt und dass zwischen den beiden Rastenkonturen (5, 5') zweier benachbarter Schaltschwingen (1, 1') ein den Schaltschwingen (1, 1') zugeordnetes Verriegelungsblech (6) drehbar angeordnet ist, welches an jedem Ende eine Nut (7, 7') zur Aufnahme eines Gehäuses bzw. einer Buchse der Rastierteile (3, 3') der Schaltschwingen aufweist, wobei das Verriegelungsblech (6) derart angeordnet und dimensioniert ist, dass sich in der Neutralstellung der Schaltschwingen (1, 1') die Gehäuse bzw. die Buchsen der Rastierteile (3, 3') teilweise in der jeweiligen Nut (7, 7') des Verriegelungsblechs (6) befinden.

2. Einrichtung zur Rastierung und Verriegelung von Schaltschwingen einer Schalteinrichtung eines Getriebes, nach Anspruch 1, **dadurch gekennzeichnet, dass** das Verriegelungsblech (6) derart geformt ist, dass eine axiale Bewegung des Rastierteils (3) einer betätigten Schaltschwinge (1) nach Verlassen der Rastenkontur (5) in einer Drehbewegung des Verriegelungsblechs (6) resultiert, derart, dass das Gehäuse bzw. die Buchse des Rastierteils (3') der benachbarten Schaltschwinge (1') spielfrei in der entsprechenden Nut (7') hineingedrückt bleibt, solange das Rastierteil (3) der betätigten Schaltschwinge (1) nicht in die Neutralstellung zurückbewegt wird, wodurch die benachbarte Schaltschwinge (1') verriegelt wird.

3. Einrichtung zur Rastierung und Verriegelung von Schaltschwingen einer Schalteinrichtung eines Getriebes, nach Anspruch 1 oder 2, **dadurch gekennzeichnet, dass** die Rastierteile (3, 3') der Schaltschwingen (1, 1') als kombinierte Teile ausgeführt sind oder aus einer Buchse, einer Rastierfeder und einem Bolzen oder einer Kugel bestehen.

4. Verwendung der Einrichtung zur Rastierung und Verriegelung von Schaltschwingen einer Schalteinrichtung eines Getriebes nach einem der vorangehenden Ansprüche in einem Doppelkupptungsgetriebe.

## Claims

1. Device for latching and locking shift rockers (1, 1') of a shifting device of a transmission, which device has a latching part (3, 3') for each shift rocker (1, 1'), which latching part (3, 3'), in addition to latching, also serves to lock the shift rocker (1, 1'), **characterized in that** the latching part (3, 3') is arranged in a receptacle (2) of the shift rocker (1, 1'), **in that** the latching part (3, 3') interacts for latching with a latching contour (5, 5') which is attached in an immovable transmission region, and **in that** a locking plate (6) which is assigned to the shift rockers (1, 1') is arranged rotatably between the two latching contours (5, 5') of two adjacent shift rockers (1, 1'), which locking plate (6) has, at each end, a groove (7, 7') for receiving a housing or a sleeve of the latching parts (3, 3') of the shift rockers, the locking plate (6) being arranged and dimensioned in such a way that, in the neutral position of the shift rockers (1, 1'), the housings and the sleeves of the latching parts (3, 3') are situated partially in the respective groove (7, 7') of the locking plate (6).

2. Device for latching and locking shift rockers of a shifting device of a transmission, according to Claim 1, **characterized in that** the locking plate (6) is shaped in such a way that an axial movement of the latching part (3) of an actuated shift rocker (1) after leaving the latching contour (5) results in a rotational movement of the locking plate (6), in such a way that the housing or the sleeve of the latching part (3') of the adjacent shift rocker (1') remains pressed into the corresponding groove (7') without play, as long as the latching part (3) of the actuated shift rocker (1) is not moved back into the neutral position, as a result of which the adjacent shift rocker (1') is locked.

3. Device for latching and locking shift rockers of a shifting device of a transmission, according to Claim 1 or 2, **characterized in that** the latching parts (3, 3') of the shift rockers (1, 1') are configured as combined parts or consist of a sleeve, a latching spring and a pin or a ball.

4. Use of the device for latching and locking shift rockers of a shifting device of a transmission according to one of the preceding claims in a dualclutch transmission.

## Revendications

1. Dispositif pour l'encliquetage et le verrouillage de balanciers de commande (1, 1') d'un dispositif de commutation d'une boîte de vitesse, qui présente, pour chaque balancier de commande (1, 1'), une partie d'encliquetage (3, 3'), qui sert en plus de l'encliquetage, également au verrouillage du balancier de commande (1, 1'), **caractérisé en ce que** la partie d'encliquetage (3, 3') est disposée dans un logement (2) du balancier de commande (1, 1'), **en ce que** la partie d'encliquetage (3, 3'), coopère pour l'encliquetage avec un contour de cliquet (5, 5') monté dans une partie non mobile de la boîte de vitesse et **en ce qu'**entre les deux contours de cliquet (5, 5') de deux balanciers de commande (1, 1') adjacents est disposée à rotation une tôle de verrouillage (6) associée aux balanciers de commande (1, 1'), qui présente, à chaque extrémité, une rainure (7, 7') pour recevoir un boîtier ou une douille des parties d'encliquetage (3, 3') des balanciers de commande, la tôle de verrouillage (6) étant disposée et dimensionnée de telle sorte que les boîtiers ou les douilles des parties d'encliquetage (3, 3') des balanciers de commande (1, 1'), dans la position neutre des balanciers de commande (1, 1'), se trouvent en partie dans la rainure respective (7, 7') de la tôle de verrouillage (6).

2. Dispositif pour l'encliquetage et le verrouillage de balanciers de commande d'un dispositif de commutation d'une boîte de vitesse selon la revendication 1, **caractérisé en ce que** la tôle de verrouillage (6) est formée de telle sorte qu'un déplacement axial de la partie d'encliquetage (3) d'un balancier de commande actionné (1) après la sortie hors du contour de cliquet (5) entraîne un mouvement de rotation de la tôle de verrouillage (6), de telle sorte que le boîtier ou la douille de la partie d'encliquetage (3') du balancier de commande adjacent (1') reste enfoncé(e) sans jeu dans la rainure correspondante (7'), tant que la partie d'encliquetage (3) du balancier de commande actionné (1) n'est pas ramenée dans la position neutre, de sorte que le balancier de commande adjacent (1') soit verrouillé.

3. Dispositif pour l'encliquetage et le verrouillage de balanciers de commande d'un dispositif de commutation d'une boîte de vitesse selon la revendication 1 ou 2, **caractérisé en ce que** les parties d'encliquetage (3, 3') des balanciers de commande (1, 1') sont réalisées sous forme de pièces combinées ou se composent d'une douille, d'un ressort d'encliquetage et d'un boulon ou d'une bille.

4. Utilisation du dispositif pour l'encliquetage et le verrouillage de balanciers de commande d'un dispositif de commutation d'une boîte de vitesse selon l'une quelconque des revendications précédentes dans une boîte de vitesse à double embrayage.
